# EUROPEAN PATENT APPLICATION

(11) **EP 4 598 092 A1**
(43) Date of publication of application: **06.08.2025**
(21) Application number: 22960104.2
(22) Date of filing: 29.09.2022
(51) Int. Cl.: H04W 24/02, H04L 27/00

(54) **MEASUREMENT GAP CONFIGURATION METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: HU, Ziquan, Beijing 100085 (CN); TAO, Xuhua, Beijing 100085 (CN)
(74) Representative: Gunzelmann, Rainer
(86) International application number: PCT/CN2022/122822
(87) International publication number: WO 2024/065467

(57) **Abstract**

Provided in the embodiments of the present disclosure are a measurement gap configuration method and apparatus, and a communication device and a storage medium. The measurement gap configuration method is executed by a network device, and comprises: sending configuration information to a UE, wherein the configuration information indicates a predetermined configuration of at least one measurement gap, which is configured for the UE; and the predetermined configuration comprises a priority configuration and/or a measurement opportunity configuration.

## Description

### TECHNICAL FIELD

The disclosure relates to, but is not limited to, a field of wireless communication technology, in particular to a measurement gap (MG) configuration method, an MG configuration apparatus, a communication device and a storage medium.

### BACKGROUND

In a multi-universal subscriber identity module (MUSIM) communication scenario, a user equipment (UE) supporting a MUSIM capability supports multiple (which means two or more) card slots, and can be connected to multiple networks at the same time. The UEs can be divided into single transport (TX)/single receive (RX) UEs, single TX/ dual RX UEs and dual TX/dual RX UEs according to different UE capabilities.

In the related art, the MUSIM UE can support multiple networks at the same time. For example, the MUSIM UE can support two networks at the same time, one of which is a New Radio (NR) network, and the other is a NR or Long Term Evolution (LTE) network or a 3G network. For a single TX/single RX UE or a single TX/ dual RX UE, it cannot maintain two or more Radio Resource Control (RRC) connections at the same time because it only has the capability of one receiving antenna. In this scenario, the UE is in an RRC connected state in one network and in an RRC disconnected state in other networks.

For the MUSIM communication scenario, multiple MGs may be configured for the UE, and there is no clear solution in the related art when these MGs collide.

### SUMMARY

Embodiments of the disclosure provide an MG configuration method, an MG configuration apparatus, a communication device and a storage medium.

According to a first aspect of embodiments of the disclosure, an MG configuration method is provided. The method is performed by a network device, and includes:
sending configuration information to a UE, in which the configuration information indicates a predetermined configuration of at least one MG configured for the UE, and the predetermined configuration includes a priority configuration and/or a measurement opportunity configuration.

In some embodiments, the configuration information includes at least one of:
priority configuration information that indicates a priority of the MG; or
measurement opportunity configuration information that indicates a measurement opportunity for measurement based on the MG.

In some embodiments, the configuration information indicates the predetermined configuration of the at least one MG configured by a first network for the UE.

In some embodiments, the MG includes at least one of:
a first-type MG used for measurement of a first network; or
a second-type MG used for measurement of a second network.

In some embodiments, the method includes:
receiving auxiliary information sent by the UE, in which the auxiliary information indicates the predetermined configuration of the MG that the UE expects to be configured.

In some embodiments, the auxiliary information includes:
first indication information for indicating the priority configuration information and/or the measurement opportunity configuration information of the at least one MG;
or,
second indication information for indicating at least one first list and/or at least one second list, in which the first list is used for indicating at least one priority configuration information, and the second list is used for indicating at least one measurement opportunity configuration information.

In some embodiments, the MG includes the second-type MG.

Sending the configuration information to the UE, includes:
based on the received auxiliary information, sending the configuration information to the UE.

In some embodiments, the measurement opportunity is a measurement probability, and a sum of measurement probabilities of at least one MG for the same measurement is less than or equal to a predetermined value.

In some embodiments, sending the configuration information to the UE, includes:
sending an RRC message to the UE, in which the RRC message includes the configuration information.

According to a second aspect of embodiments of the disclosure, an MG configuration method is provided. The method is performed by a UE, and includes:
receiving configuration information sent by a network device, in which the configuration information indicates a predetermined configuration of at least one MG configured for the UE, and the predetermined configuration includes a priority configuration and/or a measurement opportunity configuration.

In some embodiments, the configuration information includes at least one of:
priority configuration information that indicates a priority of the MG; or
measurement opportunity configuration information that indicates a measurement opportunity for measurement based on the MG.

In some embodiments, the configuration information indicates the predetermined configuration of the at least one MG configured by a first network for the UE.

In some embodiments, the MG includes at least one of:
a first-type MG used for measurement of a first network; or
a second-type MG used for measurement of a second network.

In some embodiments, the method includes:
sending auxiliary information to the network device, in which the auxiliary information indicates the predetermined configuration of the MG that the UE expects to be configured.

In some embodiments, the auxiliary information includes:
first indication information for indicating the priority configuration information and/or the measurement opportunity configuration information of the at least one MG;
or,
second indication information for indicating at least one first list and/or at least one second list, in which the first list is used for indicating at least one priority configuration information, and the second list is used for indicating at least one measurement opportunity configuration information.

In some embodiments, the MG includes the second-type MG, and the auxiliary information is used for the network device to send the configuration information.

In some embodiments, the measurement opportunity is a measurement probability, and a sum of measurement probabilities of at least one MG for the same measurement is less than or equal to a predetermined value.

In some embodiments, the method includes at least one of:
in response to a conflict between at least two MGs, performing measurement based on the MG with the highest priority;
performing measurement based on the measurement opportunity configuration of the MG;
in response to the conflict between at least two MGs, performing measurement based on the MG with a specified priority; or
in response to the conflict between at least two MGs with the same priority, performing measurement based on measurement opportunity configurations of the MGs.

In some embodiments, receiving the configuration information sent by the network device, includes:
receiving an RRC message sent by the network device, in which the RRC message includes the configuration information.

According to a third aspect of embodiments of the disclosure, an MG configuration apparatus is provided. The apparatus includes:
a first sending module, configured to send configuration information to a UE, in which the configuration information indicates a predetermined configuration of at least one MG configured for the UE, and the predetermined configuration includes a priority configuration and/or a measurement opportunity configuration.

In some embodiments, the configuration information includes at least one of:
priority configuration information that indicates a priority of the MG; or
measurement opportunity configuration information that indicates a measurement opportunity for measurement based on the MG.

In some embodiments, the configuration information indicates the predetermined configuration of the at least one MG configured by a first network for the UE.

In some embodiments, the MG includes at least one of:
a first-type MG used for measurement of a first network; or
a second-type MG used for measurement of a second network.

In some embodiments, the apparatus includes:
a first receiving module, configured to receive auxiliary information sent by the UE, in which the auxiliary information indicates the predetermined configuration of the MG that the UE expects to be configured.

In some embodiments, the auxiliary information includes:
first indication information for indicating the priority configuration information and/or the measurement opportunity configuration information of at least one MG;
or,
second indication information for indicating at least one first list and/or at least one second list, in which the first list is used for indicating at least one priority configuration information, and the second list is used for indicating at least one measurement opportunity configuration information.

In some embodiments, the MG includes the second-type MG.

The first sending module is configured to send the configuration information to the UE based on the received auxiliary information.

In some embodiments, the measurement opportunity is a measurement probability, and a sum of measurement probabilities of at least one MG for the same measurement is less than or equal to a predetermined value.

In some embodiments, the first sending module is configured to send an RRC message to the UE, in which the RRC message includes the configuration information.

According to a fourth aspect of embodiments of the disclosure, an MG configuration apparatus is provided. The apparatus includes:
a second receiving module, configured to receive configuration information sent by a network device, in which the configuration information indicates a predetermined configuration of at least one MG configured for the UE, and the predetermined configuration includes a priority configuration and/or a measurement opportunity configuration.

In some embodiments, the configuration information includes at least one of:
priority configuration information that indicates a priority of the MG; or
measurement opportunity configuration information that indicates a measurement opportunity for measurement based on the MG.

In some embodiments, the configuration information indicates the predetermined configuration of at least one MG configured by a first network for the UE.

In some embodiments, the MG includes at least one of:
a first-type MG used for measurement of a first network; or
a second-type MG used for measurement of a second network.

In some embodiments, the apparatus includes:
a second sending module, configured to send auxiliary information to the network device, in which the auxiliary information indicates the predetermined configuration of the MG that the UE expects to be configured.

In some embodiments, the auxiliary information includes:
first indication information for indicating the priority configuration information and/or the measurement opportunity configuration information of the at least one MG;
or,
second indication information for indicating at least one first list and/or at least one second list, in which the first list is used for indicating at least one priority configuration information, and the second list is used for indicating at least one measurement opportunity configuration information.

In some embodiments, the MG includes the second-type MG, and the auxiliary information is used for the network device to send the configuration information.

In some embodiments, the measurement opportunity is a measurement probability, and a sum of measurement probabilities of at least one MG for the same measurement is less than or equal to a predetermined value.

In some embodiments, the apparatus includes a processing module, configured to implement at least one of:
in response to a conflict between at least two MGs, performing measurement based on the MG with the highest priority;
performing measurement based on the measurement opportunity configuration of the MG;
in response to the conflict between at least two MGs, performing measurement based on the MG with a specified priority; or
in response to the conflict between at least two MGs with the same priority, performing measurement based on measurement opportunity configurations of the MGs.

In some embodiments, the second receiving module is configured to receive an RRC message sent by the network device, in which the RRC message includes the configuration information.

According to a fifth aspect of embodiments of the disclosure, a communication device is provided. The communication device includes:
a processor;
a memory for storing instructions executable by the processor;
in which the processor is configured to implement the MG configuration method according to any embodiment of the disclosure when running the executable instructions.

According to a sixth aspect of embodiments of the disclosure, a computer storage medium is provided. The computer storage medium stores a computer executable program, and when the computer executable program is executed by a processor, the MG configuration method according to any embodiment of the disclosure is implemented.

The technical solutions of the embodiments of the disclosure include the following beneficial effects.

In the embodiments of the disclosure, the network device sends the configuration information to the UE, in which the configuration information indicates a predetermined configuration of at least one MG configured by the UE, and the predetermined configuration includes a priority configuration and/or a measurement opportunity configuration. The UE can know the priority configuration and/or the measurement opportunity configuration of the at least one MG configured for the UE, which is beneficial for the UE to determine the MG to be measured based on the priority configuration and/or the measurement opportunity configuration of the at least one MG when there is a conflict between MGs, thus solving a problem of MG conflict and/or reducing a probability of MG conflict.

It should be understood that both the foregoing general description and the following detailed description are exemplary and explanatory only, and cannot limit the embodiments of the disclosure.

### BRIEF DESCRIPTION OF THE DRAWINGS

FIG. 1 is a schematic diagram of a wireless communication system according to an exemplary embodiment.
FIG. 2 is a schematic diagram of an MG configuration method according to an exemplary embodiment.
FIG. 3 is a schematic diagram of an MG configuration method according to an exemplary embodiment.
FIG. 4 is a schematic diagram of an MG configuration method according to an exemplary embodiment.
FIG. 5 is a schematic diagram of an MG configuration method according to an exemplary embodiment.
FIG. 6 is a schematic diagram of an MG configuration method according to an exemplary embodiment.
FIG. 7 is a block diagram of an MG configuration apparatus according to an exemplary embodiment.
FIG. 8 is a block diagram of an MG configuration apparatus according to an exemplary embodiment.
FIG. 9 is a block diagram of a UE according to an exemplary embodiment.
FIG. 10 is a block diagram of a base station according to an exemplary embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the embodiments of the disclosure. Instead, they are merely examples of apparatuses and methods consistent with aspects related to the disclosure as recited in the appended claims.

The terms used in the embodiments of the disclosure are only for the purpose of describing specific embodiments, and are not intended to limit the embodiments of the disclosure. The singular forms of "a" and "the" used in the embodiments of the disclosure and the appended claims are also intended to include plural forms, unless the context clearly indicates other meanings. It is understandable that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the term "if" as used herein may be interpreted as "when", "while" or "in response to determining".

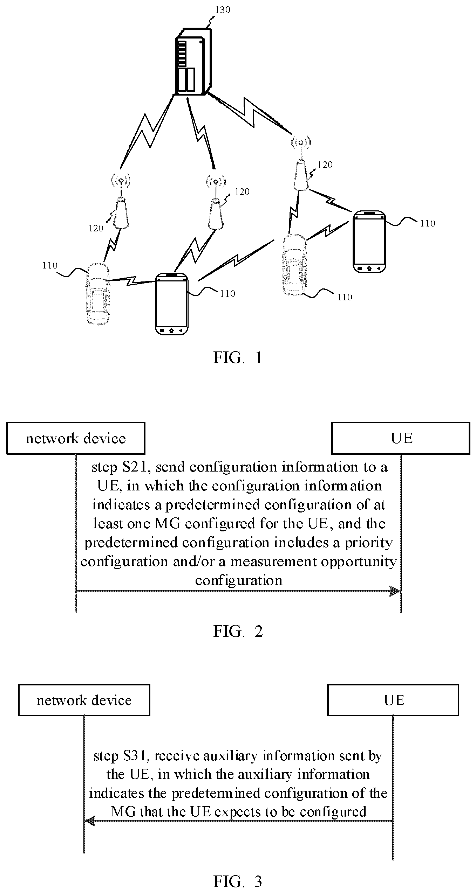

FIG. 1 is a schematic diagram illustrating a wireless communication system according to an embodiment of the disclosure. As illustrated in FIG. 1, the wireless communication system is a communication system based on cellular mobile communication technology. The wireless communication system may include: a plurality of UEs 110 and a plurality of base stations 120.

The UE 110 may be a device that provides voice and/or data connectivity to a user. The UE 110 may communicate with one or more core networks via a radio access network (RAN). The UE 110 may be an Internet of Things (IoT) UE, such as a sensor device, a cell phone (or "cellular" phone), and a computer with the IoT UE. The UE 110 may be a stationary, portable, pocket-sized, handheld, computer-built, or vehicle-mounted device, such as, a station (STA), a subscriber unit, a subscriber station, a mobile station, a mobile, a remote station, an access point, a remote terminal, an access terminal, a user terminal, a user agent, a user device, or a UE. Alternatively, the UE 110 may be an unmanned aerial vehicle device. Alternatively, the UE 110 may be a vehicle-mounted device, for example, an On-Board computer with wireless communication capabilities or a wireless UE that is external to the On-Board computer. Alternatively, the UE 110 may be a roadside device, for example, a street light, a signal light, or other roadside devices having a wireless communication function.

The base station 120 may be a network side device in the wireless communication system. The wireless communication system may be the 4th Generation (4G) mobile communication system, also known as LTE system. Or, the wireless communication system may also be a 5G system, also known as NR system or 5G NR system. Or, the wireless communication system may be any next generation system of the 5G system. The access network in the 5G system may be called New Generation-RAN (NG-RAN).

The base station 120 may be an evolved base station (eNB) employed in the 4G system. Alternatively, the base station 120 may be a base station (gNB) with a centralized distributed architecture employed in the 5G system. When the base station 120 adopts the centralized-distributed architecture, the base station 120 usually includes a central unit (CU) and at least two distributed units (DUs). The CU is provided with a protocol stack of a Packet Data Convergence Protocol (PDCP) layer, a Radio Link Control (RLC) layer, and a Media Access Control (MAC) layer. The DU is provided with a protocol stack of a physical (PHY) layer. The specific implementation of the base station 120 is not limited in the embodiment of the disclosure.

A wireless connection is established between the base station 120 and the UE 110 via a wireless radio. In different implementations, the wireless radio is a wireless radio based on the 4G standard. Alternatively, the wireless radio is a wireless radio based on the 5G standard, such as a NR. Alternatively, the wireless radio may be a wireless radio based on the standard of the next generation of 5G.

In some embodiments, End to End (E2E) connections are established between the UEs 110, such as, Vehicle to Vehicle (V2V) communication, Vehicle to Infrastructure (V2I) communication, and Vehicle to Pedestrian (V2P) communication in Vehicle to Everything (V2X) communication.

The above UE may be considered to be the terminal in the following embodiments.

In some embodiments, the above wireless communication system may also include a network management device 130.

The plurality of base stations 120 are connected to the network management device 130 respectively. The network management device 130 may be a core network device in the wireless communication system. For example, the network management device 130 is a Mobility Management Entity (MME) in an Evolved Packet Core (EPC). Alternatively, the network management device may be another core network device, such as a Serving GateWay (SGW), a Public Data Network GateWay (PGW), a Policy and Charging Rules Function (PCRF), or a Home Subscriber Server (HSS), etc. Alternatively, the core network device may be a core network device in 5G, such as, an access and mobility management function (AMF), a Policy Control Function (PCF) or a Session Management Function (SMF). The implementation form of the network management device 130 is not limited in the embodiment of the disclosure.

In order to facilitate understanding of those skilled in the art, the embodiments of the disclosure list multiple implementations to clearly illustrate the technical solutions of the embodiments of the disclosure. Certainly, those skilled in the art understand that the embodiments of the disclosure can be executed individually, or can be executed together with other method embodiments in the embodiments of the disclosure, or can be executed alone or in combination with some methods in other related arts, which is not limited in the embodiments of the disclosure.

As illustrated in FIG. 2, the embodiment of the disclosure provides an MG configuration method. The method is performed by a network device, and includes the following step.

At step S21, configuration information is sent to a UE, in which the configuration information indicates a predetermined configuration of at least one MG configured for the UE, and the predetermined configuration includes a priority configuration and/or a measurement opportunity configuration.

The network device includes a core network device or an access network device. The core network device can be a logical node, a network element or a function that can be flexibly deployed in the core network. For example, the core network device may be, but is not limited to, an AMF or an MME. The access network device may be a base station. The base station may be, but is not limited to, a 2G base station, a 3G base station, a 4G base station, a 5G base station or other evolved base stations.

In case that the network device is a core network device, the core network device sends the configuration information to the UE may be that the core network device sends the configuration information to a base station, and the base station sends the configuration information to the UE.

The UE can be various mobile terminals or fixed terminals. For example, the UE may be, but is not limited to, a mobile phone, a computer, a server, a wearable device, a vehicle-mounted terminal, a Road Side Unit (RSU), a game console or a multimedia device.

In an embodiment, the UE includes at least two Subscriber Identity Modules (SIMs), and one of the SIMs can be used to support connection to a network. The SIM includes, but is not limited to, a SIM card and an eSIM card. For example, the UE may support a first network and a second network simultaneously. The first network is a first NR network, and the second network is a second NR network or an LTE network.

In the case that the UE is a single TX/single RX UE or a single TX/dual RX UE, if the UE supports at least two networks, the UE cannot maintain RRC connections for two or more networks simultaneously, and it can only maintain an RRC connection for one network. For example, when the UE supports the first network and the second network, the UE may be in an RRC connected state in the first network and in an RRC disconnected state in the second network. The RRC disconnected state includes an RRC idle state or an RRC inactive state.

In an embodiment, the configuration information includes at least one of:
priority configuration information that indicates a priority of the MG; or
measurement opportunity configuration information that indicates a measurement opportunity for measurement based on the MG.

For example, the network device sends the configuration information to the UE. The configuration information indicates a priority of at least one MG configured for the UE and/or to indicate a measurement opportunity for measurement at least one MG configured for the UE.

In another embodiment, the configuration information is also used for indicating a MG configured for the UE. For example, the network device sends the configuration information to the UE. The configuration information indicates a first MG, a second MG and a third MG configured for the UE.

In this way, in the embodiment of the disclosure, the indication of the priority of the MG may be used for resolving the problem of conflicting MG by prioritizing which MG to measure when determining that at least two MGS are in conflict. And/or the indication of the measurement opportunity for the MG to perform the measurement may be used for reducing the probability that the MG are in conflict.

In an embodiment, the measurement opportunity is a measurement probability. The measurement probability can be a percentage or a ratio. For example, the measurement probability of the first MG configured for the UE is 20% or 0.2, and/or the measurement probability of the second MG configured for the UE is 30% or 0.3. Another example is that the measurement probability of the first MG configured for the UE for a certain measurement or a specified measurement is 40% or 0.4, etc.

In an embodiment, a sum of measurement probabilities of at least one MG for the same measurement is less than or equal to a predetermined value. The predetermined value may be 1 or 100%. For example, the UE is configured with 4 MGs, and the probabilities of these 4 MGs for the same measurement are 10%, 20%, 30% and 40% respectively. The same measurement can be any one of the measurements performed by the UE or a specified measurement.

In some embodiments, the configuration information indicates the predetermined configuration of at least one MG configured by a first network for the UE. For example, the UE supports a first network and a second network, if the UE maintains an RRC connection in the first network, the configuration information indicates the predetermined configuration of at least one MG configured by the first network for the UE. Here, one MG may refer to one or more MGs. In the embodiment of the disclosure, "plurality" means two or more.

The MG configured by the first network for the UE may be a MG used for measurement of the first network and/or a MG used for measurement of the second network.
In an embodiment, the MG includes at least one of:
a first-type MG used for measurement of a first network; or
a second-type MG used for measurement of a second network.

The second network may be one or more networks.

The first-type MG may be, but is not limited to, a R15 MG, a R16 MG, a R17 MG, a R18 MG, a R19 MG and/or a R20 MG. The first-type MG may be, but is not limited to, a MG for measurement purposes such as Non-Terrestrial Network (NTN) measurement and/or location measurement.

The second-type MG may be, but is not limited to, a MUSIM MG. For example, the second-type MG may be, but is not limited to, an R18 MG, an R19 MG and/or an R20 MG, etc.

For example, the configuration information indicates an R15 MG, an R16 MG and an R17 MG for measurement of the first network, and a MUSIM MG for measurement of the second network configured for the UE by the first network. The MUSIM MG may be a periodic MG or an aperiodic MG.

In this way, the probability of conflict between MGs configured for measurement of the first network and/or the probability of collision between MGs configured for measurement of the second network may be reduced for the UE under the first network connection.

In the embodiment of the disclosure, the network device sends the configuration information to the UE. The configuration information indicates a predetermined configuration of at least one MG configured for the UE, and the predetermined configuration includes a priority configuration and/or a measurement opportunity configuration. In this way, the UE can know the priority configuration and/or the measurement opportunity configuration of at least one configured MG, which is beneficial for the UE to determine the MG for measurement based on the priority configuration and/or the measurement opportunity configuration of the at least one MG when there is a conflict between MGs, thus solving the problem of MG conflict and/or reducing the probability of MG conflict.

In an embodiment, configuration information is sent to the UE in step S21 includes: the RRC message is sent to the UE, in which the RRC message includes the configuration information.

The embodiment of the disclosure provides an MG configuration method. The method is performed by a network device and includes: sending an RRC message to the UE, in which the RRC message includes the configuration information.

In an embodiment, the RRC message may be one of: an RRC setup completion message, an RRC reconstruction completion message, an RRC configuration message and an RRC reconfiguration message. Certainly, the RRC message can also be other RRC messages, or the RRC message can also be replaced by other realizable messages.

In the embodiment of the disclosure, the network device sends the RRC message including the configuration information to the UE, so that two functions (for example, implementing an RRC connection function of the RRC message itself and informing a MG predetermined configuration configured for the UE) can be realized through one RRC message, which can improve a utilization rate of signaling and reduce an overhead of signaling.

It should be noted that those skilled in the art can understand that the methods provided by the embodiments of the disclosure can be executed alone or together with other methods in the embodiments of the disclosure or some methods in the related art.

As illustrated in FIG. 3, the embodiment of the disclosure provides an MG configuration method. The method is performed by a network device and includes the following step.

At step S31, auxiliary information sent by the UE is received, in which the auxiliary information indicates the predetermined configuration of the MG that the UE expects to be configured.

In some embodiments of the disclosure, the MG is the MG in the above embodiments. The predetermine configuration is that predetermined configuration in the above embodiments.

For example, the MG includes at least one of:
a first-type MG used for measurement of a first network; or
a second-type MG used for measurement of a second network.

For example, the predetermined configuration includes a priority configuration and/or a measurement opportunity configuration.

For example, the auxiliary information indicates a priority of at least one MG that the UE expects to be configured and/or a measurement opportunity of measurement based on the MG that the UE expects to be configured. Here, the measurement opportunity may be the measurement probability.

In this way, in the embodiment of the disclosure, the network device receives the auxiliary information sent by the UE, to know the priority of the MG and/or the measurement opportunity for which UE preferences are configured.

In an embodiment, the auxiliary information includes: first indication information for indicating a priority configuration information and/or a measurement opportunity configuration information of at least one MG.

For example, the network device receives the auxiliary information reported by the UE. The auxiliary information includes the first indication information, which indicates that the priority of the first MG that the UE expects to be configured is the first priority and/or the measurement opportunity of the first MG that the UE expects to be configured is the first percentage, and the priority of the second MG that the UE expects to be configured is the second priority and/or the measurement opportunity of the second MG that the UE expects to be configured is the second percentage.

In an embodiment, the auxiliary information includes: second indication information for indicating at least one first list and/or at least one second list, in which the first list is used for indicating at least one priority configuration information, and the second list is used for indicating at least one measurement opportunity configuration information.

The priority configuration information in the first list indicates a priority of each MG in the third list respectively, and/or the measurement opportunity configuration information in the second list indicates a measurement opportunity of each MG in the third list respectively. The third list is a list indicating at least one MG included in the auxiliary information.

For example, the MGs configured by the UE are the first MG, the second MG and the third MG by default. The network device receives the auxiliary information reported by the UE. The auxiliary information includes second indication information for indicating a first list and a second list. The first list includes priority configuration information of the first priority, the second priority and the third priority, and the second list includes measurement opportunity configuration information of the first percentage, the second percentage and the third percentage. By default, the network device considers the priority of the first MG configured for the UE to be the first priority and measurement opportunity of the first MG configured for the UE to be the first percentage, the priority of the second MG configured for the UE to be the second priority and measurement opportunity of the second MG configured for the UE to be the second percentage, and the priority of the third MG configured for the UE to be the third priority and measurement opportunity of the third MG configured for the UE to be the third percentage.

For example, the network device receives the auxiliary information reported by the UE. The auxiliary information includes third indication information and second indication information. The third indication information indicates a third list, and the third list indicates the first MG, the second MG and the third MG configured for the UE. The second indication information indicates a first list and a second list. The first list includes priority configuration information of the first priority, the third priority and the second priority, and the second list includes measurement opportunity configuration information of the first percentage, the third percentage and the second percentage. At this time, the priority of the first MG configured by the network equipment for the UE is the first priority and the measurement opportunity of the first MG configured by the network equipment for the UE is the first percentage, the priority of the second MG configured by the network equipment for the UE is the third priority and the measurement opportunity of the second MG configured by the network equipment for the UE is the third percentage, and the priority of the third MG configured by the network equipment for the UE is the second priority and the measurement opportunity of the third MG configured by the network equipment for the UE is the second percentage.

Each of the first indication information, the second indication information and the third indication information may be indicated by one or more bits.

In an embodiment, the auxiliary information indicates the MG that the UE expects to be configured.

In this way, in the embodiment of the disclosure, the predetermined configuration of the preferential MG of the UE can be indicated in the auxiliary information in various ways, so that it can adapt to more application scenarios.

It should be noted that those skilled in the art can understand that the methods provided by the embodiments of the disclosure can be executed alone or together with other methods in the embodiments of the disclosure or some methods in the related art.

In some embodiments, the MG includes the second-type MG.

Configuration information is sent to the UE in step S31 includes: configuration information is sent to the UE based on the received auxiliary information.

The embodiment of the disclosure provides an MG configuration method, which is performed by a network device and includes:
receiving auxiliary information sent by the UE, in which the auxiliary information indicates the predetermined configuration of the MG that the UE expects to be configured; and
sending the configuration information to the UE based on the auxiliary information, in which the configuration information indicates the predetermined configuration of the MG configured for the UE.

In the embodiment of the disclosure, for the second-type MG, i.e., the MG used for measurement of the second network, when the UE is in an RRC connected state in the first network, the network device of the first network may not be able to accurately determine the MG used for measurement of the second network and the priority and/or measurement opportunity for measurement of the second network, in such a case, the network device can accurately determine the priority configuration and/or the measurement opportunity configuration of the MG configured for the UE based on the auxiliary information sent by the UE, and send the corresponding configuration information.

It should be noted that those skilled in the art can understand that the methods provided by the embodiments of the disclosure can be executed alone or together with other methods in the embodiments of the disclosure or some methods in the related art.

The following MG configuration method is performed by the UE, which is similar to the description of the MG configuration method performed by the network device. Technical details not disclosed in the embodiments of the MG configuration method performed by the UE can be referred to the description of the examples of the MG configuration method performed by the network device, and will not be described in detail here.

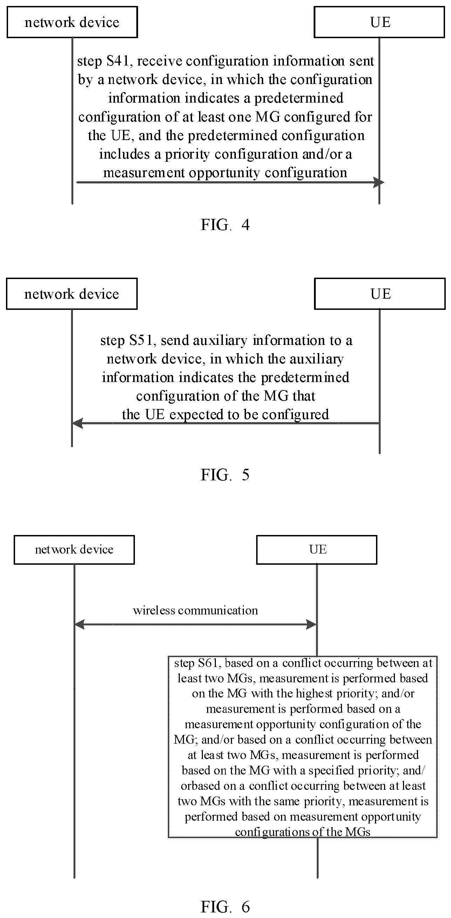

As illustrated in FIG. 4, the embodiment of the disclosure provides an MG configuration method. The method is performed by a UE, and includes the following step.

At step S41, configuration information sent by a network device is received, in which the configuration information indicates a predetermined configuration of at least one MG configured for the UE, and the predetermined configuration includes a priority configuration and/or a measurement opportunity configuration.

In some embodiments of the disclosure, the UE and the network device may refers to the UE and the network device in the above embodiments. The configuration information may be that configuration information in the above embodiments. The MG can be that MG in the above embodiments. The predetermined configuration may be that predetermined configuration in the above embodiments.

For example, the UE includes at least two SIMs, and one of which is used to support one network connection. The SIM can be, but is not limited to, a SIM card or an eSIM card.

For example, the configuration information includes at least one of:
priority configuration information that indicates a priority of the MG; or
measurement opportunity configuration information that indicates a measurement opportunity for measurement based on the MG.

For example, the configuration information indicates the predetermined configuration of at least one MG configured by a first network for the UE.

For example, the MG includes at least one of:
a first-type MG used for measurement of a first network; or
a second-type MG used for measurement of a second network.

In some embodiments of the disclosure, the first-type MG and the second-type MG may be the first-type MG and the second-type MG respectively.

For example, the first-type MG may be, but is not limited to, an R15 MG, an R16 MG, an R17 MG, an R18 MG, an R19 MG and/or an R20 MG, etc.

For example, the second-type MG may be, but is not limited to, a MUSIM MG. For example, the second-type MG may be, but is not limited to, an R18 MG, an R19 MG and/or an R20 MG, etc.

In the embodiment of the disclosure, the UE can know the priority configuration and/or the measurement opportunity configuration of the configured at least one MG, which is beneficial for the UE to determine the MG for measurement based on the priority configuration and/or the measurement opportunity configuration of the at least one MG when a conflict occurs between MGs, thereby solving the problem of MG conflict and/or reducing the probability of MG conflict.

In some embodiments, configuration information sent by a network device is received in step S41 includes: an RRC message sent by the network device is received, in which the RRC message includes the configuration information.

The embodiment of the disclosure provides an MG configuration method. The method is performed by a UE, and includes: receiving an RRC message sent by the network device, in which the RRC message includes the configuration information.

In some embodiments of the disclosure, the RRC message may be the RRC message in the above embodiments.

As illustrated in FIG. 5, the embodiment of the disclosure provides an MG configuration method. The method is performed by a UE, and includes the following step.

At step S51, auxiliary information is sent to a network device, in which the auxiliary information indicates the predetermined configuration of the MG the UE expects to be configured.

In some embodiments of the disclosure, the auxiliary information may be the auxiliary information in the above embodiments. The first indication information and the second indication information may be the first indication information and the second indication information in the above embodiments, respectively.

For example, the auxiliary information includes:
first indication information for indicating a priority configuration information and/or a measurement opportunity configuration information of at least one MG; or,
second indication information for indicating at least one first list and/or at least one second list, in which the first list is used for indicating at least one priority configuration information, and the second list is used for indicating at least one measurement opportunity configuration information.

The priority configuration information in the first list indicates the priority of each MG in the third list respectively, and/or the measurement opportunity configuration information in the second list indicates the measurement opportunity of each MG in the third list respectively. The third list is a list indicating at least one MG included in the auxiliary information.

For example, the auxiliary information indicates the MG that the UE expects to be configured.

Thus, the UE sends the auxiliary information to the network device to inform the network device of the predetermined configuration of the MG that the UE expect to be configured preferentially.

In some embodiments, the MG includes the second-type MG, and the auxiliary information is used for the network device to send the configuration information.

In some embodiments, the measurement opportunity is a measurement probability, and a sum of measurement probabilities of at least one MG for the same measurement is less than or equal to a predetermined value.

Details of the above embodiments can refer to the statement of the network device side, and will not repeated here.

It should be noted that those skilled in the art can understand that the methods provided by the embodiments of the disclosure can be executed alone or together with other methods in the embodiments of the disclosure or some methods in the related art.

As illustrated in FIG. 6, the embodiment of the disclosure provides an MG configuration method. The method is performed by a UE, and includes the following step.

At step S61, based on a conflict occurring between at least two MGs, measurement is performed based on the MG with the highest priority and/or measurement is performed based on a measurement opportunity configuration of the MGs; and/or based on a conflict occurring between at least two MGs, measurement is performed based on the MG with a specified priority; and/or based on a conflict occurring between at least two MGs, and the at least two MGs having the same priority, measurement is performed based on measurement opportunity configuration of the MGs.

The specified priority can be the second highest priority or any of the top priorities, etc.

For example, the network device configures the UE three MGs, the three MGs are the first MG, the second MG and the third MG. The UE receives the configuration information sent by the network device, and the configuration information indicates that the priority of the first MG, the second MG and the third MG are the second priority, the first priority and the third priority respectively. The priority of the first priority is higher than that of the second priority, and the priority of the second priority is higher than that of the third priority. If the first MG, the second MG and the third MG conflict, the UE may determine the MG with the highest priority, i.e., the second MG to be used for measurement.

For example, the network device configures the UE three MGs, the three MGs are the first MG, the second MG and the third MG. The UE receives the configuration information sent by the network device, and the configuration information indicates that the measurement opportunity of the first MG, the second MG and the third MG for the first measurement are 30%, 20% and 50% respectively. The UE performs MG-based measurement based on the shared configuration of MG. For example, measurement may be performed based on the third MG.

For example, the network device configures the UE three MGs, the three MGs are the first MG, the second MG and the third MG respectively. The UE receives the configuration information sent by the network device. The configuration information indicates that the priority of the first MG, the second MG and the third MG are the first priority, the first priority and the second priority respectively, and the measurement opportunity of the first MG and the second MG are 75% and 25% respectively. The priority of the first priority is higher than that of the second priority. If the first MG conflicts with the second MG, and the first MG and the second MG have the same priority, both of which are the first priority, the UE may determine that measurement can be performed based on the MG with the highest measurement opportunity, that is, it can determine that measurement is performed based on the first MG.

In the embodiment of the disclosure, when a conflict between MGs occurs, based on the configuration information sent by the network device received by the UE, the UE can select an appropriate MG for measurement according to the priority configuration and/or the measurement opportunity configuration of the MG configured for the UE indicated by the configuration information, which can reduce the occurrence of conflict between MGs.

It should be noted that those skilled in the art can understand that the methods provided by the embodiments of the disclosure can be executed alone or together with other methods in the embodiments of the disclosure or some methods in the related art.

In order to further explain any embodiment of the disclosure, several specific embodiments are provide below.

The embodiment of the disclosure provides an MG configuration method. The method is performed by a communication device, which includes the UE and the network device. The MG configuration method includes the following steps.

At step S71, the UE sends auxiliary information to the network device, in which the auxiliary information indicates a predetermined configuration of a second-type MG that the UE expects to be configured.

The second-type MG is an MG used for the second network. The second-type MG may be a MUSIM MG.

In an optional embodiment, the UE sends the auxiliary information to the network device. The auxiliary information includes the first indication information that indicates the priority configuration and/or the measurement opportunity configuration of at least one MUSIM MG (MUSIM gap). This embodiment is the mode A of sending the auxiliary information.

In another optional embodiment, the UE sends the auxiliary information to the network device. The auxiliary information includes the second indication information that indicates at least one first list and/or at least one second list, the first list is used for indicating at least one priority configuration information, and the second list indicates at least one measurement opportunity configuration information. This embodiment is the mode B of sending the auxiliary information.

For example, modes A and B of sending the auxiliary information are shown below.

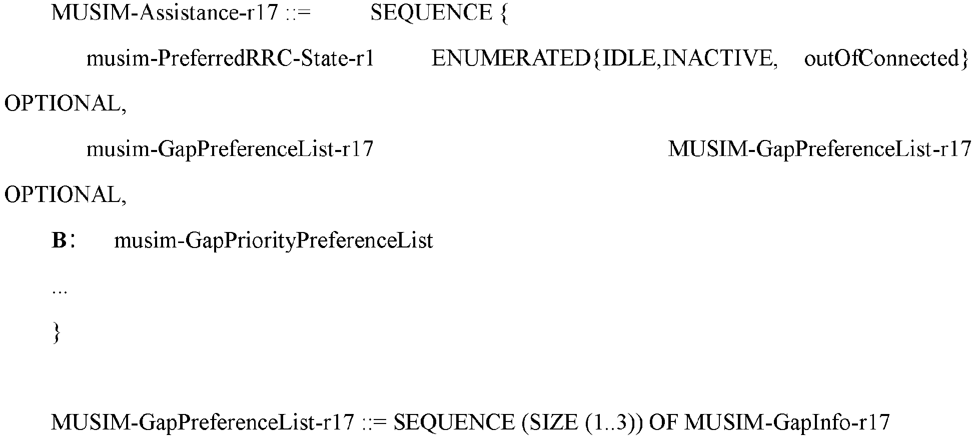

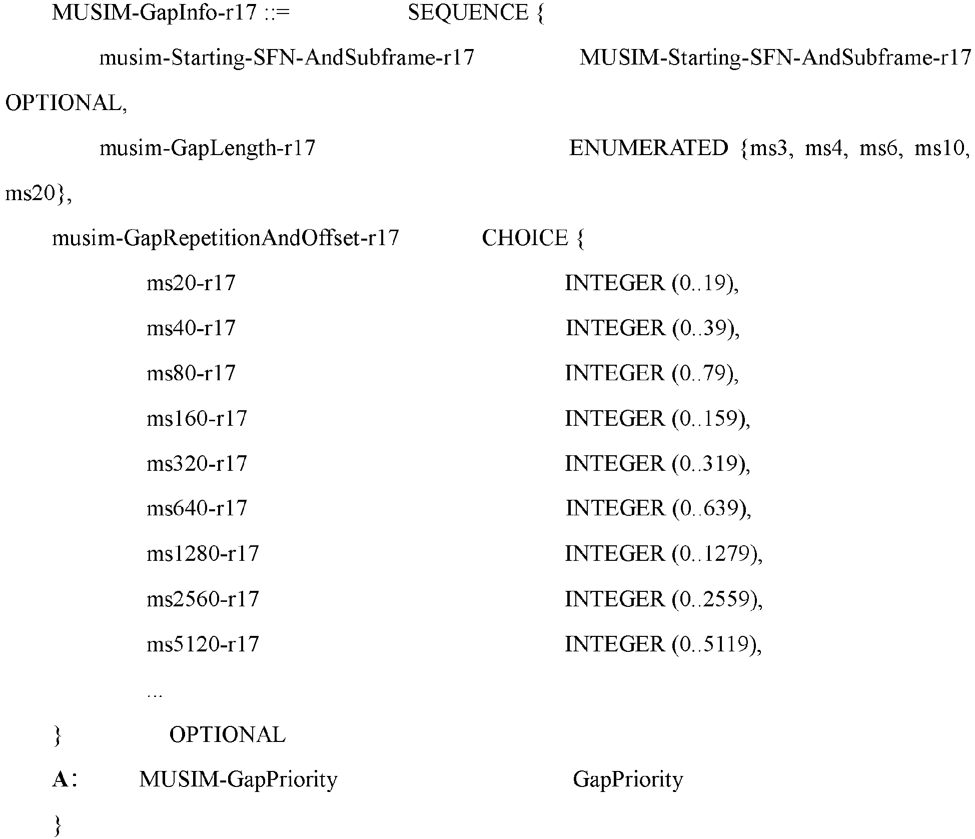

At step S72, the network device sends an RRC message to the UE according to the auxiliary information sent by the UE. The RRC message includes configuration information, which indicates the predetermined configuration of the second-type MG configured for the UE. The predetermined configuration includes a priority configuration and a measurement opportunity configuration.

For example, the priority and/or the sharing measurement opportunity configuration of the MUSIM gap is provided as follows:

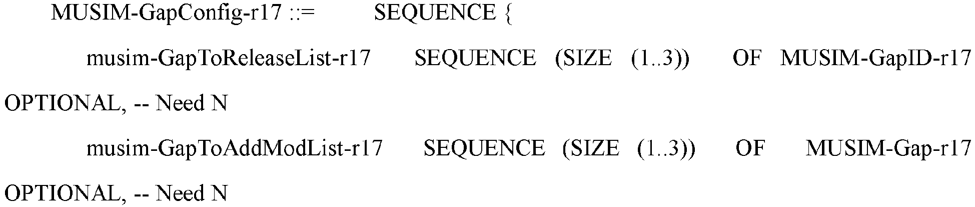

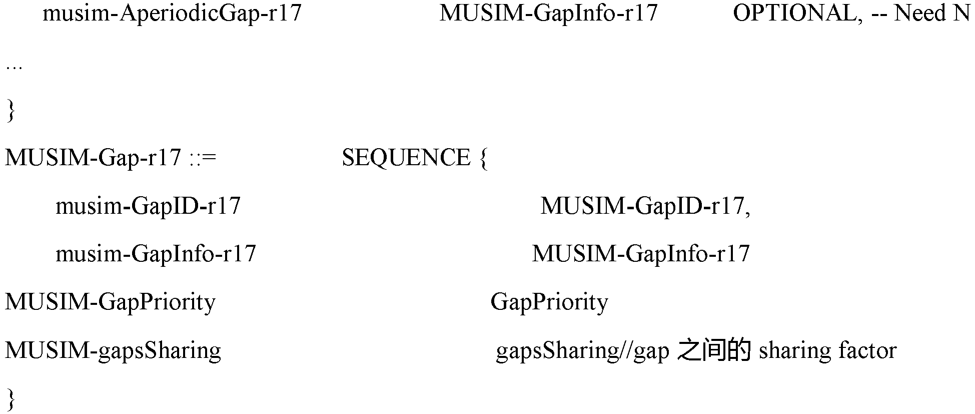

At step S73, the network device sends an RRC message to the UE. The RRC message includes configuration information. The configuration information indicates a priority configuration and/or a measurement opportunity configuration of the first-type MG (such as an R15 MG and an R16 MG).

For example, the shared configuration of the priority of the R15 MG and the R16 MG and/or the measurement opportunity configuration of the R15 MG and the R16 MG is provided as follows:

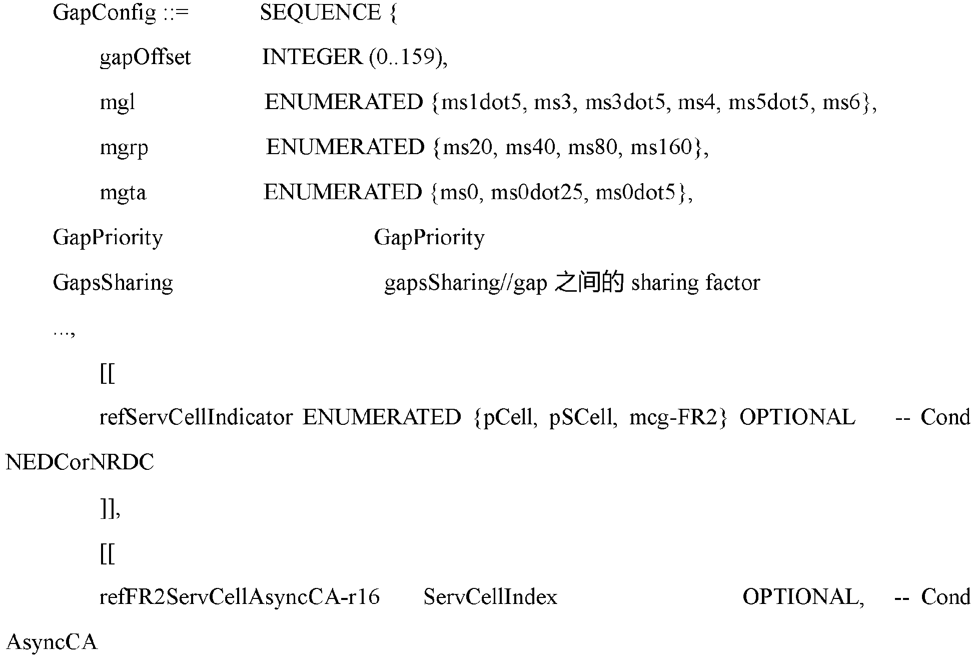

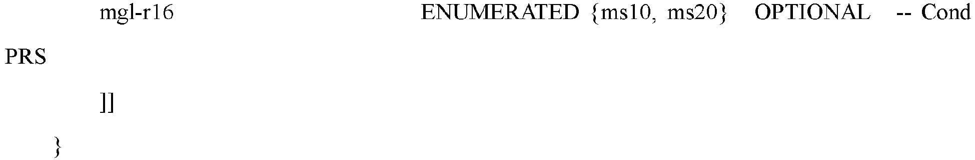

At step S74, the network device sends an RRC message to the UE. The RRC message includes configuration information, and the configuration information indicates a priority and/or a measurement opportunity configuration of a first-type MG (e.g., R17 MG).

For example, the shared configuration of measurement opportunity of the R17 MG is provided as follows:

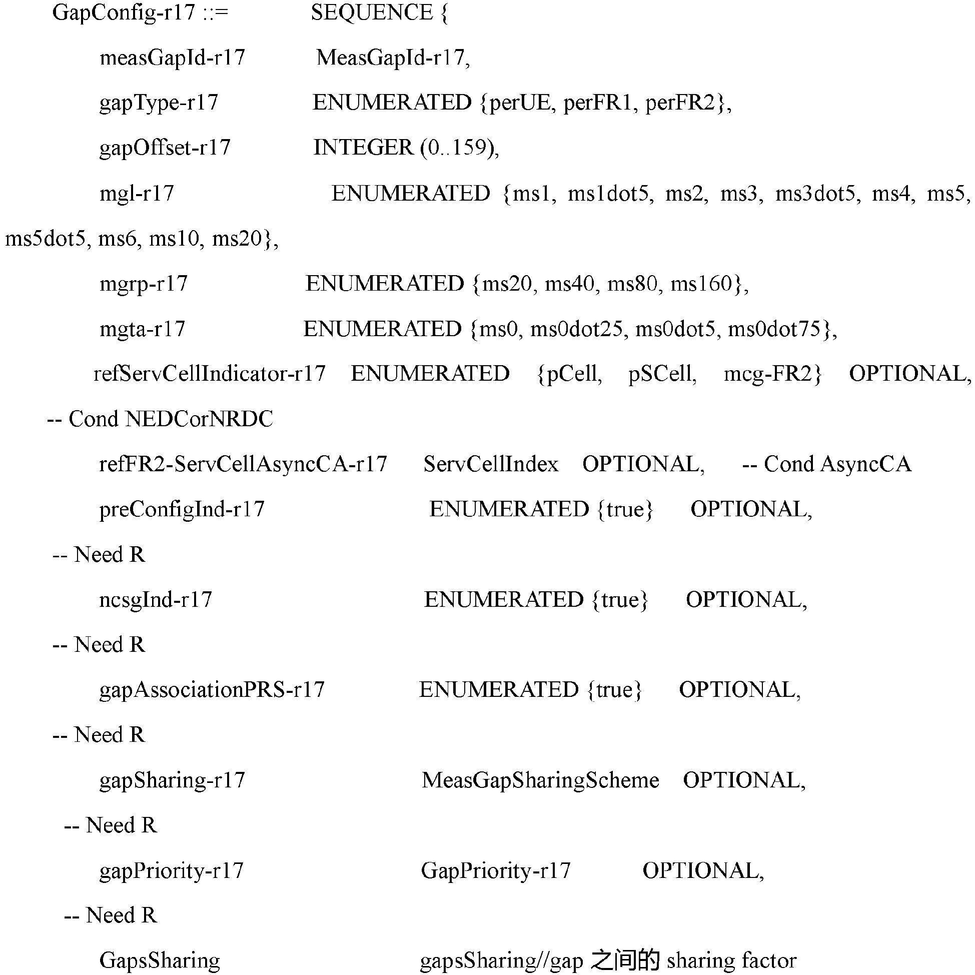

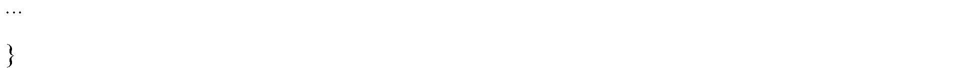

In an optional embodiment, the measurement opportunity of MG in the above steps S72, S73 and S74 is represented by percentage. For the same measurement, the sum of the percentages of measurement opportunities of each MG is 1.

At step S75, after receiving the configuration information indicating predetermined configurations of a MUSIM gap, an R15 MG, an R16 MG, and an R17 MG, the UE may determine the priorities and/or the measurement opportunities of these MGs; in case of conflict between at least two of the MGs, measurement is performed based on the MG with the highest priority among the MGs or the MG with the highest measurement opportunity when the MGs have the same priority, and measurements based on the MGs with other priorities or measurement opportunities are abandoned.

It should be noted that those skilled in the art can understand that the methods provided by the embodiments of the disclosure can be executed alone or together with other methods in the embodiments of the disclosure or some methods in the related art.

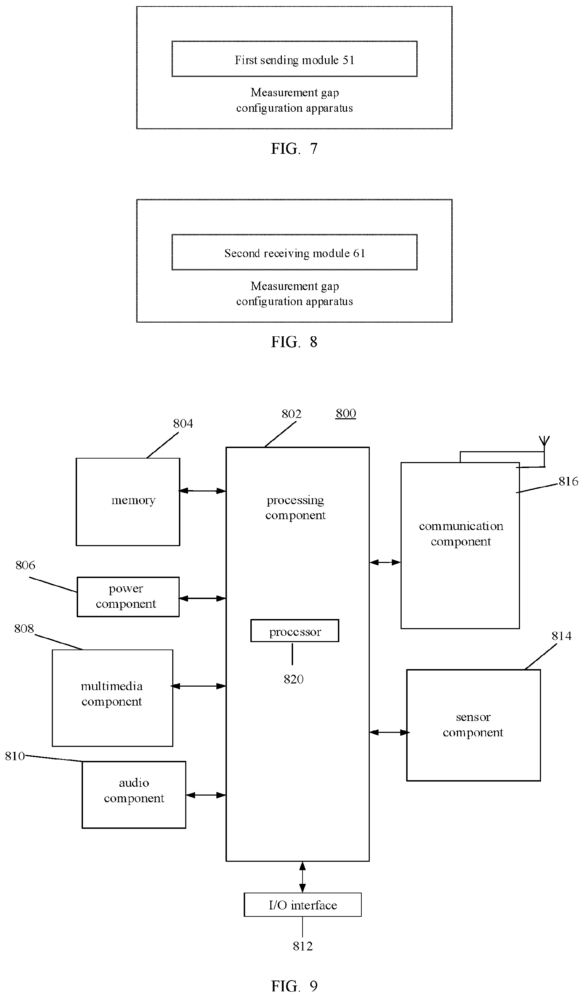

As illustrated in FIG. 7, the embodiment of the disclosure provides an MG configuration apparatus. The apparatus includes:
a first sending module 51, configured to send configuration information to a UE, in which the configuration information indicates a predetermined configuration of at least one MG configured for the UE, and the predetermined configuration includes a priority configuration and/or a measurement opportunity configuration.

The MG configuration apparatus of the embodiment of the disclosure is a network device.

In some embodiments, the configuration information includes at least one of:
priority configuration information that indicates a priority of the MG; or
measurement opportunity configuration information that indicates a measurement opportunity for measurement based on the MG.

In some embodiments, the configuration information indicates the predetermined configuration of at least one MG configured by a first network for the UE.

In some embodiments, the MG includes at least one of:
a first-type MG used for measurement of a first network; or
a second-type MG used for measurement of a second network.

The embodiment of the disclosure provides an MG configuration apparatus. The apparatus includes: a first receiving module. The first receiving module is configured to: receive auxiliary information sent by the UE, in which the auxiliary information indicates the predetermined configuration of the MG that the UE expects to be configured.

In some embodiments, the auxiliary information includes: first indication information for indicating a priority configuration information and/or a measurement opportunity configuration information of at least one MG; or,
second indication information for indicating at least one first list and/or at least one second list, in which the first list is used for indicating at least one priority configuration information, and the second list is used for indicating at least one measurement opportunity configuration information.

In some embodiments, the MG includes the second-type MG.

The embodiment of the disclosure provides an MG configuration apparatus. The apparatus includes: a first sending module 51. The first sending module 51 is configured to send the configuration information to the UE based on the received auxiliary information.

In some embodiments, the measurement opportunity is a measurement probability, and a sum of measurement probabilities of at least one MG for the same measurement is less than or equal to a predetermined value.

The embodiment of the disclosure provides an MG configuration apparatus. The apparatus includes: a first sending module 51. The first sending module 51 is configured to send an RRC message to the UE, in which the RRC message includes the configuration information.

As illustrated in FIG. 8, the embodiment of the disclosure provides an MG configuration apparatus. The apparatus includes:
a second receiving module 61, configured to receive configuration information sent by a network device, in which the configuration information indicates a predetermined configuration of at least one MG configured for the UE, and the predetermined configuration includes a priority configuration and/or a measurement opportunity configuration.

In some embodiments, the configuration information includes at least one of:
priority configuration information that indicates a priority of the MG; or
measurement opportunity configuration information that indicates a measurement opportunity for measurement based on the MG.

In some embodiments, the configuration information indicates the predetermined configuration of at least one MG configured by a first network for the UE.

In some embodiments, the MG includes at least one of:
a first-type MG used for measurement of a first network; or
a second-type MG used for measurement of a second network.

The embodiment of the disclosure provides an MG configuration apparatus. The apparatus includes: a second sending module. The second sending module is configured to send auxiliary information to the network device, in which the auxiliary information indicates the predetermined configuration of the MG that the UE expects to be configured.

In some embodiments, the auxiliary information includes: first indication information for indicating a priority configuration information and/or a measurement opportunity configuration information of at least one MG; or,
second indication information for indicating at least one first list and/or at least one second list, in which the first list is used for indicating at least one priority configuration information, and the second list is used for indicating at least one measurement opportunity configuration information.

In some embodiments, the MG includes the second-type MG, and the auxiliary information is used for the network device to send the configuration information.

In some embodiments, the measurement opportunity is a measurement probability, and a sum of measurement probabilities of at least one MG for the same measurement is less than or equal to a predetermined value.

The embodiment of the disclosure provides an MG configuration apparatus. The apparatus includes a processing module, configured to implement at least one of:
in response to a conflict between at least two MGs, performing measurement based on the MG with the highest priority;
performing measurement based on a measurement opportunity configuration of the MG;
in response to a conflict between at least two MGs, performing measurement based on the MG with a specified priority; or
in response to a conflict between at least two MGs with the same priority, performing measurement based on measurement opportunity configurations of the MGs.

The embodiment of the disclosure provides an MG configuration apparatus. The apparatus includes: a second receiving module 61. The second receiving module 61 is configured to receive an RRC message sent by the network device, in which the RRC message includes the configuration information.

It should be noted that those skilled in the art can understand that the apparatuses provided by the embodiments of the disclosure can be executed alone or together with other devices in the embodiments of the disclosure or some devices in the related art.

With regard to the apparatuses in the above embodiments, the specific way in which each module performs operations has been described in detail in the embodiments related to the methods, and will not be described in detail here.

The embodiment of the disclosure provides a communication device. The communication device includes:
a processor;
a memory for storing processor-executable instructions;
wherein the processor is configured to implement the MG configuration method of any embodiment of the disclosure when running the executable instructions.

In an embodiment, the communication device may include, but is not limited to, at least one of a UE and/or a network device. The network device includes a base station or a core network device.

The processor includes various types of storage mediums, which are non-transitory computer storage mediums and can continue to remember information stored on the UE after the UE loses power.

The processor may be connected to the memory through a bus or the like for reading the executable programs stored on the memory, for example, at least one of the methods shown in FIGS. 2-6.

The embodiment of the disclosure also provides a computer storage medium. The computer storage medium stores a computer executable program, and when the executable program is executed by a processor, the MG configuration method of any embodiment of the disclosure is realized, for example, at least one of the methods shown in FIGS. 2-6.

With respect to the apparatus or the storage medium of the above embodiments, the specific manner in which each module performs an operation has been described in detail in the embodiments relating to the method, and will not be described in detail herein.

FIG. 9 is a block diagram of a UE 800 according to an exemplary embodiment. For example, the UE 800 may be a mobile phone, a computer, a digital broadcasting UE, a message transceiver device, a game console, a tablet device, a medical device, a fitness device or a personal digital assistant.

As illustrated in FIG. 9, the UE 800 includes one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone call, data communication, camera operation, and recording operation. The processing component 802 may include one or more processors 820 to perform instructions to implement all or part of the steps in the above described methods. Moreover, the processing component 802 may include one or more modules which facilitate the interaction between the processing component 802 and other components. For example, the processing component 802 may include a multimedia module to facilitate interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a calling mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of a user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, 4G, or 5G, or a combination thereof. In an exemplary embodiment, the communication component 816 receives a broadcast signal from an external broadcast management system or broadcast associated information via a broadcast channel. In an exemplary embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described methods.

In the exemplary embodiment, there is also provided a non-transitory computer readable storage medium including instructions, such as the memory 804, executable by the processor 820 in the UE 800, for implementing the above methods. For example, the non-transitory computer-readable storage medium may be a ROM, a Random Access Memory (RAM), a CD-ROM, a magnetic tape, a floppy disc, and an optical data storage device.

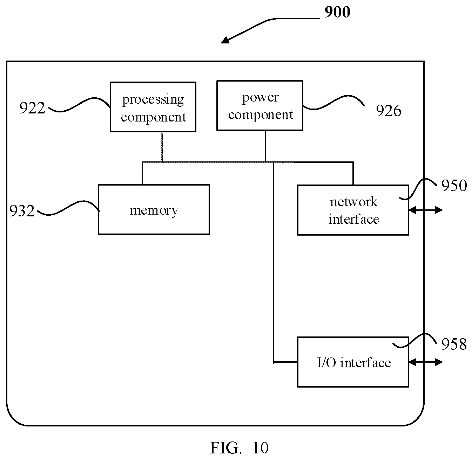

As illustrated in FIG. 10, the embodiment of the disclosure shows the structure of a base station. For example, the base station 900 may be provided as a network side device. As illustrated in FIG. 10, the base station 900 includes a processing component 922 including one or more processors, and memory resources represented by a memory 932 for storing instructions that can be executed by the processing component 922, such as applications. The application programs stored in the memory 932 may include one or more modules each corresponding to a set of instructions. In addition, the processing component 922 is configured to execute the instructions to implement any of the method performed by the base station.

The base station 900 may also include a power component 926 configured to perform power management of the base station 900, a wired or wireless network interface 950 configured to connect the base station 900 to a network, and an I/O interface 958. The base station 900 may operate on an operating system stored in the memory 932, such as Windows ServerTM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. A measurement gap configuration method, performed by a network device, comprising:
sending configuration information to a user equipment (UE), wherein the configuration information indicates a predetermined configuration of at least one measurement gap configured for the UE, and the predetermined configuration comprises a priority configuration and/or a measurement opportunity configuration.

2. The method of claim 1, wherein the configuration information comprises at least one of:
priority configuration information that indicates a priority of the measurement gap; or
measurement opportunity configuration information that indicates a measurement opportunity for measurement based on the measurement gap.

3. The method of claim 1 or 2, wherein the configuration information indicates the predetermined configuration of the at least one measurement gap configured by a first network for the UE.

4. The method of any one of claims 1-3, wherein the measurement gap comprises at least one of:
a first-type measurement gap used for measurement of a first network; or
a second-type measurement gap used for measurement of a second network.

5. The method of any one of claims 1-4, further comprising:
receiving auxiliary information sent by the UE, wherein the auxiliary information indicates the predetermined configuration of the measurement gap that the UE expects to be configured.

6. The method of claim 5, wherein the auxiliary information comprises:
first indication information for indicating the priority configuration information and/or the measurement opportunity configuration information of the at least one measurement gap;
or,
second indication information for indicating at least one first list and/or at least one second list, wherein the first list indicates at least one priority configuration information, and the second list indicates at least one measurement opportunity configuration information.

7. The method of claim 5, wherein the measurement gap comprises the second-type measurement gap; and
sending the configuration information to the UE, comprises:
sending the configuration information to the UE based on the auxiliary information.

8. The method of any one of claims 1-7, wherein a measurement opportunity is a measurement probability, and a sum of a measurement probability of at least one measurement gap for the same measurement is less than or equal to a predetermined value.

9. The method of any one of claims 1-7, wherein sending the configuration information to the UE, comprises:
sending a radio resource control (RRC) message to the UE, wherein the RRC message comprises the configuration information.

10. A measurement gap configuration method, performed by a user equipment (UE), comprising:
receiving configuration information sent by a network device, wherein the configuration information indicates a predetermined configuration of at least one measurement gap configured for the UE, and the predetermined configuration comprises a priority configuration and/or a measurement opportunity configuration.

11. The method of claim 10, wherein the configuration information comprises at least one of:
priority configuration information that indicates a priority of the measurement gap; or
measurement opportunity configuration information that indicates a measurement opportunity for measurement based on the measurement gap.

12. The method of claim 10 or 11, wherein the configuration information indicates the predetermined configuration of the at least one measurement gap configured by a first network for the UE.

13. The method of any one of claims 10-12, wherein the measurement gap comprises at least one of:
a first-type measurement gap used for measurement of a first network; or
a second-type measurement gap used for measurement of a second network.

14. The method of any one of claims 10-13, comprising:
sending auxiliary information to the network device, wherein the auxiliary information indicates the predetermined configuration of the measurement gap that the UE expects to be configured.

15. The method of claim 14, wherein the auxiliary information comprises:
first indication information for indicating the priority configuration information and/or the measurement opportunity configuration information of the at least one measurement gap;
or,
second indication information for indicating at least one first list and/or at least one second list, wherein the first list is used for indicating at least one priority configuration information, and the second list is used for indicating at least one measurement opportunity configuration information.

16. The method of claim 15, wherein the measurement gap comprises the second-type measurement gap, and the auxiliary information is used for the network device to send the configuration information.

17. The method of any one of claims 10-16, wherein a measurement opportunity is a measurement probability, and a sum of a measurement probability of at least one measurement gap for the same measurement is less than or equal to a predetermined value.

18. The method of claims 10-16, wherein the method comprises at least one of:
based on a conflict occurring between at least two measurement gaps, performing measurement based on a measurement gap with a highest priority;
performing measurement based on the measurement opportunity configuration of the measurement gap;
based on a conflict occurring between at least two measurement gaps, performing measurement based on a measurement gap with a specified priority; or
based on a conflict occurring between at least two measurement gaps with the same priority, performing measurement based on measurement opportunity configurations of the measurement gaps.

19. The method of any one of claims 10-18, wherein receiving the configuration information sent by the network device, comprises:
receiving a radio resource control (RRC) message sent by the network device, wherein the RRC message comprises the configuration information.

20. A measurement gap configuration apparatus, comprising:
a first sending module, configured to send configuration information to a user equipment (UE), wherein the configuration information indicates a predetermined configuration of at least one measurement gap configured for the UE, and the predetermined configuration comprises a priority configuration and/or a measurement opportunity configuration.

21. A measurement gap configuration apparatus, comprising:
a second receiving module, configured to receive configuration information sent by a network device, wherein the configuration information indicates a predetermined configuration of at least one measurement gap configured for the UE, and the predetermined configuration comprises a priority configuration and/or a measurement opportunity configuration.

22. A communication device, comprising:
a processor;
a memory for storing instructions executable by the processor;
wherein the processor is configured to implement the measurement gap configuration method according to any one of claims 1-9 or the measurement gap configuration method of any one of claims 10-19 when running the executable instructions.

23. A computer storage medium, wherein the computer storage medium stores a computer executable program, and when the computer executable program is executed by a processor, the measurement gap configuration method according to any one of claims 1-9 or the measurement gap configuration method of any one of claims 10-19 is implemented.
